**Europäisches Patentamt**

**European Patent Office**

**Office européen des brevets**

(11) Veröffentlichungsnummer: **0 064 097**

**B1**

(12) **EUROPÄISCHE PATENTSCHRIFT**

(45) Veröffentlichungstag der Patentschrift:
24.09.86

(51) Int. Cl.⁴: **H 04 L 25/49**

(21) Anmeldenummer: **81109278.2**

(22) Anmeldetag: **29.10.81**

(54) **Verfahren zur Umsetzung von digitalen Eingangssignalen eines Lichtwellenleiterübertragungssystems.**

(30) Priorität: **30.04.81 DE 3117221**

(43) Veröffentlichungstag der Anmeldung:
**10.11.82 Patentblatt 82/45**

(45) Bekanntmachung des Hinweises auf die Patenterteilung:
**24.09.86 Patentblatt 86/39**

(84) Benannte Vertragsstaaten:
**AT CH IT LI SE**

(56) Entgegenhaltungen:
**NTG-FACHBERICHTE ISSLS 80, Band 73, 15-19. September 1980, München, Seiten 31-35, VDE-Verlag GmbH, Berlin, DE., J.P. ANDRY et al.: "A long burst time-shared digital transmission system for subscribber loops"**
**SECOND INTERNATIONAL CONFERENCE ON TELECOMMUNICATION TRANSMISSION - INTO THE DIGITAL ERA, 17.-20. März 1981, Seiten 80-84, London, IEE, London, GB., R.W. BLACKMORE et al.: "A 34Mb/s optical line system operating at 1.3 micron"**

(73) Patentinhaber: **Siemens Aktiengesellschaft Berlin und München, Wittelsbacherplatz 2, D-8000 München 2 (DE)**

(72) Erfinder: **Burgmeier, Jürgen, Dipl.- Ing., Flossmannstrasse 2 a, D-8000 München 60 (DE)**

## Beschreibung

Die Erfindung betrifft ein Verfahren zum Umsetzen von digitalen Eingangssignalen eines Lichtwellenleiter-Übertragungssystems aus einem ersten Binärcode mit 32 unterschiedlichen Codeworten mit jeweils fünf Binärziffern entsprechend 32 möglichen Amplitudenwerten in Ausgangssignale, die in einem zweiten Binärcode mit Codeworten aus sechs Binärziffern mit einem positiven und einem negativen Mode, wobei sich der Mode entsprechend der laufend digitalen Summe am Ende des vorhergehenden Codewortes mit sechs Binärziffern ergibt, auftreten, bei dem die 32 möglichen Amplitudenwerte des Eingangssignals in zwei gleichgroße Bereiche mit jeweils 16 Codeworten unterteilt werden und dabei der erste Bereich die Amplitudenwerte zwischen einem geringsten Amplitudenwert und einem ersten mittleren Amplitudenwert und der zweite Bereich die Amplitudenwerte zwischen einem zweiten mittleren Amplitudenwert und einem maximalen Amplitudenwert umfaßt, bei dem die Codeworte für den positiven Mode des Ausgangssignals des ersten Bereichs so gewählt werden, daß sich eine möglichst große Übereinstimmung zwischen Eingangs- und Ausgangssignals ergibt und bei dem für den niedrigsten Amplitudenwert des zweiten Bereichs das Codewort für den positiven Mode dem invertierten Codewort des negativen Mode des höchsten Amplitudenwertes des ersten Bereichs und das Codewort für den negativen Mode dem invertierten Codewort des positiven Modes des höchsten Amplitudenwertes des ersten Bereichs entspricht.

Die Entwicklung dämpfungsarmer Glassorten für Lichtwellenleiterkabel einerseits und die Erhöhung der Lebensdauer der Lichtsender andererseits ermöglicht die Einführung von Lichtwellenleiter-Übertragungssystemen als preis- und energiegünstige Alternative zu Kupferkabelsystemen. Aufgrund der nichtlinearen Eigenschaften der optischen Sendeelemente werden vorzugsweise digitale Signale - und zwar im Binärcode - übertragen, wobei "Licht ein" der binären 1 und "Licht aus" der binären 0 oder umgekehrt zugeordnet wird. Damit ergeben sich zwei Probleme.

Da in Zwischenregeneratoren im allgemeinen sowohl eine Amplituden- als auch eine zeitliche Regeneration des Signals stattfindet, muß das Übertragungssignal hinreichend große Taktinformation enthalten. Dies ist bei einem beliebigen Datensignal nicht sichergestellt. Zum anderen soll der Mittelwert (Gleichanteil) des Signals konstant sein, damit im Empfänger nur der Wechselanteil verstärkt werden muß und der konstante und bekannte Gleichanteil erst bei der Amplitudenentscheidung berücksichtigt werden muß. Beide Probleme können sicher nur dadurch gelöst werden, daß dem Signal Redundanz hinzugefügt wird. Da bei LWL-Systemen im allgemeinen eine geringe Erhöhung der Übertragungsbandbreite in Kauf genommen werden kann, hat sich für LWL-Systemen mit 34 bzw. 140 Mbit/s eine Blockcodierung durchgesetzt, bei der blockweise fünf Binärziffern des Eingangssignals in sechs Binärziffern des Ausgangssignals umgesetzt werden. Die Eingangssignale können dabei auch aus Codewörtern mit n Blöcken zu je fünf Binärziffern bestehen, die entsprechend in n Blöcke mit je sechs Binärziffern umgesetzt werden.

Aus NTG Fachberichte ISSLS 80, Band 73, September 1980, Seiten 31 bis 35 ist ein digitales Teilnehmersystem für Kupferleitungen bekannt bei dem Sechsbitworte übertragen werden, die durch Umcodierung aus Fünfbitworten entsprechend der in Seite 32 veröffentlichten Tabelle 1 erzeugt werden. Die 32 möglichen Amplitudenwerte der Tabelle 1 lassen sich ebenfalls in zwei gleichgroße Bereiche mit 16 Codeworten unterteilen, wobei der erste Bereich die Amplitudenwerte zwischen einem geringsten Amplitudenwert und einem ersten mittleren Amplitudenwert und der zweite Bereich die Amplitudenwerte zwischen einem zweiten mittleren Amplitudenwert und einem maximalen Amplitudenwert umfaßt. Weiterhin sind die Codeworte für den positiven Mode des Ausgangssignals des ersten Bereichs so gewählt, daß sich eine möglichst große Übereinstimmung zwischen Eingangs- und Ausgangssignal ergibt. Auch entspricht für den niedrigsten Amplitudenwert des zweiten Bereichs das Codewort für den positiven Mode dem invertierten Codewort des negativen Mode des höchsten Amplitudenwertes der ersten Bereichs und das Codewort für den negativen Mode dem invertierten Codewort des positiven Mode des höchsten Amplitudenwertes des ersten Bereichs. Die Sechsbitworte können dabei aus jeweils 3-Eins-Bits und drei 3-Null-Bits bestehen, entsprechend einem normierten Wert der Gleichstromkomponente von Null oder aus 4-Eins-Bits und 2-Null-Bits. Da im letzteren Fall mehr Eins-Bits als Null-Bits auftreten, ergibt sich ein normierter Wert der Gleichstromkomponente von +2. Die Sechsbitworte für den negativen Mode sind so gebildet, daß bei einem normierten Wert Null der Gleichstromkomponente des Sechsbitwortes für den positiven Mode dieses für den negativen Mode übernommen wird, während bei einem normierten Wert der Gleichstromkomponente von +2 für das Sechsbitwort des positiven Mode das invertierte Sechsbitwort für den negativen Mode übernommen wird, so daß sich für dies ein normierter Wert von -2 ergibt. Bis auf einen einzigen Fall ergibt sich eine Zuordnung zwischen Fünfbitwort und Sechsbitwort, die vom Codeschema nach der vorliegenden Anmeldung abweicht.

Ein Verfahren zum Umcodieren von Nachrichten, die in einem Binärcode vorliegen, ist aus der DE-AS 23 39 868 bekannt. Bei diesem Verfahren werden die n Elemente jedes Codewortes des ersten Code auf den ersten n Elementstellen eines Codewortes des Ausgangssignals in der ursprünglichen Reihenfolge und anschließend auf den letzten n Elementstellen in der umgekehrten Reihenfolge übertragen.

Auch aus der DE-AS 27 47 018 ist ein Verfahren zum Umsetzen binärer Codewörter bekannt. Bei diesem Verfahren werden die binären Codeworte in ternäre Codeworte umgeformt.

Aus der Zeitschrift "Frequenz" 34 (1980) 2, Seiten 45 bis 52, ist ein Verfahren der eingangs erwähnten Art bekannt. Bei diesem bekannten Verfahren werden ebenfalls aus fünf Binärziffern bestehende Eingangssignale in Ausgangssignale umgeformt, die sechs Binärziffern enthalten und die in einem positiven oder in einem negativen Mode auftreten. Der positive Mode enthält dabei nur Codewörter, in denen die Anzahl der Binärziffern 1 gleich der Anzahl der Binärziffern 0 oder um eins größer als diese ist, während die im negativen Mode auftretenden Codeworte so aufgebaut sind, daß die Anzahl der Binärziffern 0 die Anzahl der Binärziffern 1 gleich oder um eine größer als diese ist. Das Auftreten der Codeworte im positiven bzw. negativen Mode ergibt sich aus der laufenden digitalen Summe der sechsziffrigen Codeworte des Ausgangssignals, die dadurch gebildet wird, daß man die Binärziffer 1 mit dem Wert +1 und die Binärziffer 0 mit dem Wert -1 bewertet.

In der Tabelle 2 der Veröffentlichung "Frequenz" ist die Zuordnung zwischen Eingangs- und Ausgangssignal-Codewörter dargestellt. Für die Umsetzung ist neben einem Serien-Parallel- und einem Parallel-Serien-Umsetzer eine entsprechende Taktumsetzung sowie empfangsseitig neben dem eigentlichen Umcodierer eine Einrichtung zur Synchronisierung notwendig. Dadurch ergibt sich ein vergleichsweise hoher Aufwand, der durch Überwachungseinrichtungen für die angeführten Bauteile weiter ansteigen kann.

Die Aufgabe der Erfindung besteht darin, ein Verfahren der eingangs erwähnten Art zu finden, das für schnelle LWL-Systeme geeignet ist und sich mit vergleichsweise geringem Aufwand realisieren läßt und bei der Rückwandlung uns eine geringe Fehlervervielfachung ergibt.

Erfindungsgemäß wird die Aufgabe dadurch gelöst, daß für den zweitniedrigsten Amplitudenwert des zweiten Bereichs das Codewort für den positiven Mode dem invertierten Codewort des negativen Mode des zweithöchsten Amplitudenwertes des ersten Bereichs und das Codewort für den negativen Mode dem invertierten Codewort des positiven Modes des zweithöchsten Amplitudenwertes des ersten Bereichs entspricht, daß entsprechend die Codeworte für die weiteren Amplitudenwerte des zweiten Bereichs gebildet werden und für den höchsten Amplitudenwert des zweiten Bereichs das Codewort für den negativen Mode dem invertierten Codewort des negativen Mode des niedrigsten Amplitudenwertes des ersten Bereichs und das Codewort für den negativen Mode dem invertierten Codewort des positiven Mode des niedrigsten Amplitudenwertes des ersten Bereichs entspricht, so daß sich eine diagonal invertierte Symmetrie zwischen den beiden Bereichen der Amplitudenwerte des Eingangssignals und des Ausgangssignals ergibt.

Durch die beschriebene Aufteilung in zwei Bereiche und die Symmetrie zwischen beiden Bereichen ergibt sich die vorteilhafte Möglichkeit, die Zuordnung unter Zuhilfenahme von Gattern und gesteuerten Inverterstufen vorzunehmen.

Zur weiteren Verringerung des Aufwandes ist es zweckmäßig, daß in beiden Bereichen für den niedrigsten und den höchsten Amplitudenwert jeweils die Codeworte für den positiven und den negativen Mode einander gleich sind.

Eine bevorzugte Ausbildung des erfindungsgemäßen Verfahrens ist im Patentanspruch 3 beschrieben. Bei der Durchführung dieser Zuordnung ergibt sich eine vorteilhafte Verringerung der Fehlervervielfachung von gemittelt 1,28 gegenüber dem Verfahren nach dem Stande der Technik, bei dem ein Fehlervervielfachungsfaktor von 1,41 gemittelt erreicht wird.

Weitere Ausbildungen des erfindungsgemäßen Verfahrens sind in den Patentansprüchen 4 bis 6 beschrieben.

Die Anmeldung soll im folgenden anhand der Zeichnung näher erläutert werden. In der Zeichnung zeigen

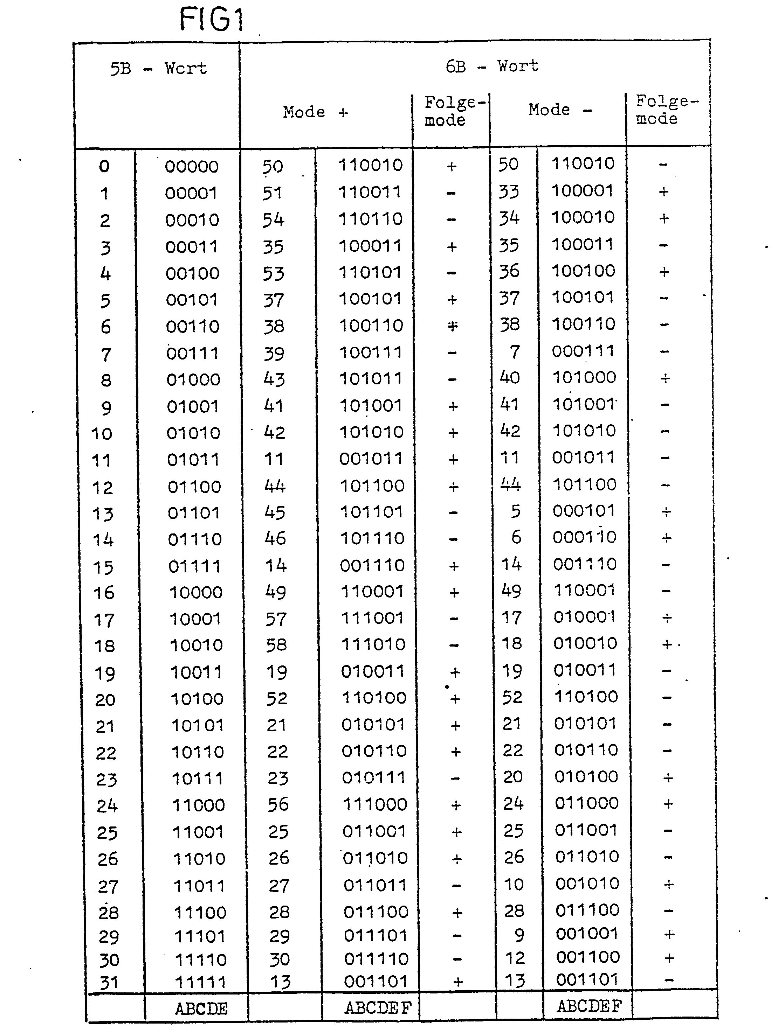

Fig. 1 eine Tabelle für die Umwandlung von Fünf-Bit-Worten in Sechs-Bit-Worte und

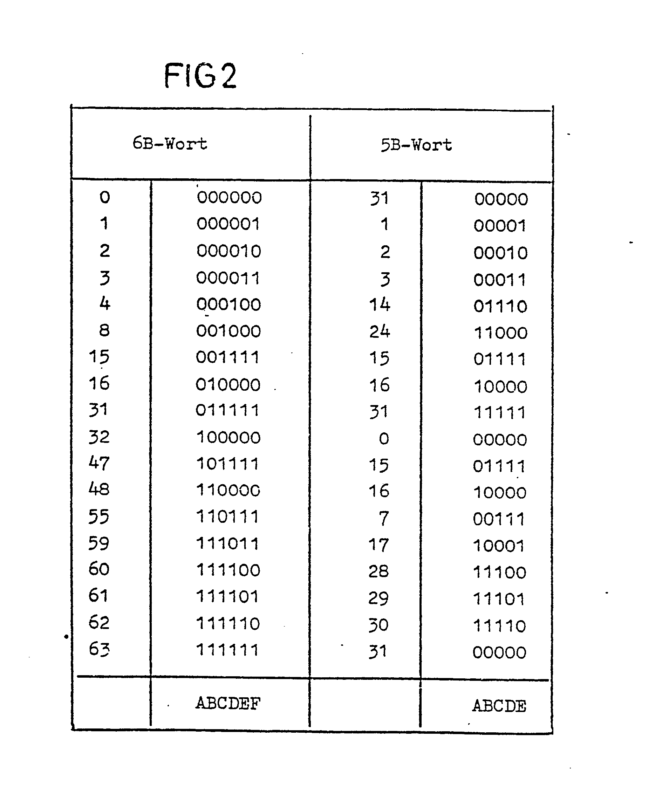

Fig. 2 eine Ergänzungstabelle zur Tabelle nach Fig. 1.

In der Tabelle 1 sind die 32 möglichen unterschiedlichen Codeworte aus fünf Binärziffern dargestellt, die das Eingangssignal annehmen kann, die laufenden Ziffern 0 bis 31 geben dabei die jeweilige Amplitudenstufe an. An die Fünf-Bit-Worte anschließend sind im positiven und im negativen Mode die Sechs-Bit-Worte des Ausgangssignals dargestellt, die als Folge der Umsetzung abgegeben werden. Außerdem sind die den Sechs-Bit-Worten entsprechenden Amplitudenstufen und die beiden Folgenmoden dargestellt. Wie bereits eingangs erwähnt, können die Sechs-Bit-Worte - gesteuert durch die laufende digitale Summe - im positiven oder im negativen Mode erscheinen. Die Reihenfolge der Fünf-Bit-Worte und der Sechs-Bit-Worte ist durch A B C... angedeutet, wobei jeweils A zuerst eingelesen bzw. abgegeben wird. Es zeigt sich, daß die 32 möglichen Amplitudenwerte des Eingangssignals in zwei gleichgroße Bereiche aufgeteilt werden können, wobei der eine Bereich die Amplitudenwerte von 0 bis 15 und der andere Bereich die Amplitudenwerte 16 bis 31 unfaßt.

Die Zuordnung zwischen den Sechs-Bitworten und den Fünf-Bit-Worten im ersten Bereich wurde so gewählt,daß sich jeweils eine möglichst große Übereinstimmung zwischen Eingangs- und Ausgangssignal ergibt, wenn die erste Stelle des Sechs-Bit-Wortes nicht berücksichtigt wird. Dadurch ist nicht nur eine einfache, sondern auch eine schnelle Zuordnung in den auftretenden Amplitudenbereichen sichergestellt.

Im Hinblick auf eine einfache Realisierung unter Umgehung aufwendiger Festwertspeicher wurde nun die Zuordnung für den zweiten Bereich so gewählt, daß für den niedrigsten Amplitudenwert des zweiten Bereichs das Codewort für den positiven Mode dem invertierten Codewort des negativen Mode des höchsten Amplitudenwertes des ersten Bereichs entspricht. Das Codewort entsprechend dem Amplitudenwert 49 stellt binär ausgedrückt das invertierte Codewort für den Amplitudenwert 14 dar. Da beim höchsten Amplitudenwert des ersten Bereichs die Codeworte für positiven und negativen Mode gleich sind, sind sie dies auch für den niedrigsten Amplitudenwert des zweiten Bereichs.

Für den zweitniedrigsten Amplitudenwert des zweiten Bereichs entspricht das Codewort 57 für den positiven Mode dem invertierten Codewort 6 des negativen Mode des zweithöchsten Amplitudenwertes des ersten Bereichs, außerdem entspricht das Codewort 17 für den negativen Mode dem invertierten Codewort 46 des positiven Mode des zweithöchsten Amplitudenwertes des ersten Bereichs.

Die Tabelle 1 ist also bei Annahme einer Symmetrielinie zwischen den Amplitudenwerten 15 und 16 des Fünf-Bitwortes und den entsprechenden Werten des Sechs-Bit-Wortes diagonal invertiert symmetrisch. Entsprechend ist also das Codewort 19 für den viertniedrigsten Amplitudenwert des zweiten Bereichs gleich dem invertierten Codewort 44 für den negativen Mode des vierthöchsten Amplitudenwertes des ersten Bereichs; da auch in diesem Falle im ersten Bereich die Codeworte 44 für den positiven und den negativen Mode gleich sind, sind sie dies auch für den viertniedrigsten Amplitudenwert des zweiten Bereichs. Schließlich ist das Codewort für den positiven Mode des höchsten Amplitudenwertes des zweiten Bereichs gleich dem invertierten Codewort des negativen Mode des niedrigsten Amplitudenwertes des ersten Bereichs. Beim niedrigsten Amplitudenwert des ersten Bereichs sind die Codeworte für den positiven und den negativen Mode gleich, so daß sie dies auch für den höchsten Amplitudenwert des zweiten Bereichs sind.

Empfangsseitig erfolgt die Rückumsetzung der sechsziffrigen Binärworte in fünfziffrige Binärworte unter Anwendung der gleichen Zuordnung entsprechend in umgekehrter Richtung.

Bei der empfangsseitigen Rückumsetzung kann das Problem auftreten, daß bei der Übertragung durch eine Störung eine Verfälschung des ursprünglich ausgesendeten Sechs-Bit-Wortes erfolgt. Unter der Annahme, daß durch die Störung nur ein einziges Bit verfälscht wurde, sind verschiedenartige Folgen möglich. Es kann sich ergeben, daß nach der Decodierung nicht ein Bit, sondern mehrere Bits verfälscht sind oder auch kein Bit verfälscht ist, es kann auch ein ursprünglich nicht verwendetes Codewort entstanden sein. Der Fehlervervielfachungsfaktor beträgt für die Zuordnung nach der Tabelle 1 und 2 im Mittel 1,28 Bit. Die Fehlervervielfachung ist also vergleichsweise sehr gering.

In der Tabelle 2 ist die Zuordnung zwischen Sechs-Bit-Wörtern und Fünf-Bit-Wörtern für die Störungsfälle dargestellt. Es sind die Sech-Bit-Wörter aufgeführt, die sendeseitig im normalen Betrieb nicht verwendet werden, die beiden Codeworte entsprechend den Amplitudenwerten 0 und 63 werden lediglich während des Fehlerortungsbetriebes verwendet und können nur bei Auftreten von Mehrfachfehlern vorkommen.

Die Realisierung der Zuordnungen entsprechend den Tabellen 1 und 2 mittels eines nach bekannten Methoden optimierten kombinatorischen Netzwerkes mittels Gattern und steuerbaren Invertern kann in zweckmäßiger Weise in einem hochintegrierten Schaltkreis, beispielsweise einem sogenannten maskenprogrammierbaren Logikbaustein der Serie SH100, erfolgen.

**Patentansprüche**

1. Verfahren zum Umsetzen von digitalen Eingangssignalen eines Lichtwellenleiter-Übertragungssystems aus einem ersten Binärcode mit 32 unterschiedlichen Codeworten mit jeweils fünf Binärziffern entsprechend 32 möglichen Amplitudenwerten in Ausgangssignale, die in einem zweiten Binärcode mit Codeworten aus sechs Binärziffern mit einem positiven und einem negativen Mode, wobei sich der Mode entsprechend der laufenden digitalen Summe am Ende des vorhergehenden Codewortes mit sechs Binärziffern ergibt, auftreten, bei dem die 32 möglichen Amplitudenwerte (0...31) des Eingangssignals in zwei gleichgroße Bereiche mit jeweils 16 Codeworten unterteilt sind und dabei der erste Bereich die Amplitudenwerte zwischen einem geringsten Amplitudenwert (0) und einem ersten mittleren Amplitudenwert (15) und der zweite Bereich die Amplitudenwerte zwischen einem zweiten mittleren Amplitudenwert (16) und einem maximalen Amplitudenwert (31) umfaßt, bei dem die Codeworte für den positiven Mode des Ausgangssignals des ersten Bereichs so gewählt werden, daß sich eine möglichst große Übereinstimmung zwischen Eingangs- und Ausgangssignals ergibt und bei dem für den niedrigsten Amplitudenwert des zweiten Bereichs das Codewort (49) für den positiven Mode dem invertierten Codewort (14) des negativen Mode des höchsten Amplitudenwertes des ersten Bereichs und das Codewort (49) für den negativen Mode dem invertierten Codewort (14) des positiven Modes des höchsten Amplitudenwertes des ersten Bereichs · entspricht, dadurch gekennzeichnet, daß für den zweitniedrigsten Amplitudenwert des zweiten Bereichs das Codewort (57) für den positiven Mode dem invertierten Codewort (6) des negativen Mode des zweithöchsten Amplitudenwertes des ersten Bereichs und das Codewort (17) für den negativen Mode dem invertierten Codewort (46) des positiven Mode des zweithöchsten Amplitudenwertes des ersten Bereichs entspricht, daß entsprechend die Codeworte für die weiteren Amplitudenwerte des zweiten Bereichs gebildet werden und für den höchsten Amplitudenwert des zweiten Bereichs das Codewort für den positiven Mode dem invertierten Codewort des negativen Mode des niedrigsten Amplitudenwertes des ersten Bereichs und das Codewort für den negativen Mode dem invertierten Codewort des positiven Mode des niedrigsten Amplitudenwertes des ersten Bereichs entspricht, so daß sich eine diagonal invertierte Symmetrie zwischen den beiden Bereichen der Amplitudenwerte des Eingangssignals und des Ausgangssignals ergibt.

2. Verfahren nach Patentanspruch 1, dadurch gekennzeichnet, daß in beiden Bereichen für den niedrigsten und den höchsten Amplitudenwert jeweils die Codeworte für den positiven und den negativen Mode einander gleich sind.

3. Verfahren nach Patentansprüchen 1 oder 2, dadurch gekennzeichnet, daß die Umsetzung des Eingangssignals in das Ausgangssignal nach dem Codeschema gemäß Tabelle 1 erfolgt.

4. Verfahren nach Patentansprüchen 1 bis 3, dadurch gekennzeichnet, daß die Rückumsetzung von sechsziffrigen in fünfziffrige Codewörter unter Anwendung der gleichen Zuordnung in umgekehrter Richtung erfolgt.

5. Verfahren nach Patentanspruch 4, dadurch gekennzeichnet, daß die Rückumsetzung von bei der Übertragung in ein ursprünglich nicht verwendetes sechsziffriges Codewort verfälschten Codewörtern nach dem Codeschema gemäß Tabelle 2 erfolgt.

6. Verfahren nach einem der vorhergehenden Patentansprüche, dadurch gekennzeichnet, daß in den Tabellen 1 und 2 die Reihenfolge der Bits sowohl innerhalb der Fünf- als auch der Sechsbitwörter vertauscht ist.

**Claims**

1. A method of converting digital input signals of a light waveguide transmission system from a first binary code comprising 32 different code words each comprising five binary digits corresponding to 32 possible amplitude values into output signals which occur in a second binary code comprising code values comprising six binary digits having a positive and a negative mode, where the mode corresponding to the continuous digital sum occurs at the end of the preceding code word comprising binary digits, wherein the 32 possible amplitude values (0...31) of the input signal are sub-divided into two equal sized sections each comprising 16 code words where the first section comprises the amplitude values between a lowest amplitude value (0) and a first middle amplitude value (15) and the second section comprises the amplitude values between a second middle amplitude value (16) and a maximum amplitude value (31), wherein the code words for the positive mode of the output signal of the first section are selected to be such that the greatest possible conformity occurs between the input and output signals, and wherein for the lowest amplitude value of the second section the code word (49) for the positive mode corresponds to the inverted code word (14) of the negative mode of the highest amplitude value of the first section, and the code word (49) for the negative mode corresponds to the inverted code word (14) of the positive mode of the highest amplitude value of the first section, characterised in that for the second lowest amplitude value of the second section, the code word (57) for the positive mode corresponds to the inverted code word (6) of the negative mode of the second highest amplitude value of the first section, and the code word (17) for the negative mode corresponds to the inverted code word (46) of the positive mode of the second highest amplitude value of the first section, that the code words for the other amplitude values of the second section are formed correspondingly, and for the highest amplitude value of the second section, the code word for the positive mode corresponds to the inverted code word of the negative mode of the lowest amplitude value of the first section and the code word for the negative mode corresponds to the inverted code word of the positive mode of the lowest amplitude value of the first section, so that a diagonally inverted symmetry occurs between the two sections of the amplitude values of the input signal and the output signal.     •

2. A method as claimed in patent claim 1, characterised in that in the two sections for the lowest and the highest amplitude values the code words for the positive and negative modes are in each case identical to one another.

3. A method as claimed in patent claims 1 or 2, characterised in that the conversion of the input signal into the output signal takes place in accordance with the code diagram shown in table 1.

4. A method as claimed in patent claims 1 to 3 characterised in that the re-conversion of 6-digit code words into 5-digit code words takes place using the same assignment in the reverse direction.

5. A method as claimed in patent claim 4, characterised in that the re-conversion of code words which, during transmission, have been adulterated into a 6-digit code word not used originally takes place in accordance with code diagram shown in table 2.

6. A method as claimed in one of the preceding patent claims, characterised in that in tables 1 and 2 the sequence of the bits both within the 5-bit words and the 6-bit words has been interchanged.

**Revendications**

1. Procédé pour convertir des signaux d'entrée numériques d'un système de transmission à guides d'ondes de lumière d'un premier code binaire à 32 mots de code différents et à 32 valeurs possibles de l'amplitude correspondant à cinq chiffres binaires, en signaux de sortie qui apparaissent dans un second code binaire à six chiffres binaires avec un mode positif et un mode négatif, le mode résultant en fonction de la somme numérique courante à la fin du mot de code précédent avec six chiffres binaires, dans lesquel les 32 valeurs (0...31) possibles de l'amplitude du signal d'entrée sont subdivisées en deux plages identiques à 16 mots de code chacune, la première plage comportant les valeurs des amplitudes comprises entre la faible valeur d'amplitude (0) et une première valeur moyenne (15) de l'amplitude, et la seconde plage comportant des valeurs des amplitudes comprises entre une seconde valeur moyenne (16) de l'amplitude et une valeur maximale (31) de l'amplitude, dans lequel les mots de code pour le mode positif du signal de sortie de la première plage sont choisis de telle manière qu'il en résulte une concordance la plus grande possible entre signal d'entrée et signal de sortie, et dans léquel pour la valeur la plus faible de l'amplitude de la seconde plage le mot de code (49) pour le mode positif, correspond au mot de code inversé (14) du mode négatif de la valeur la plus forte de l'amplitude de la première plage, et le mot de code (49) pour le mode négatif, correspond au mot de code inversé (14) du mode positif de la valeur la plus élevée de l'amplitude de la première plage, caractérisé par le fait que pour la sedonde valeur la plus faible de l'amplitude de la seconde plage, le mot de code (57) pour le mode positif correspond au mot de code inversé (6) du mode négatif de la seconde valeur la plus élevée de l'amplitude la première plage, alors que le mot de code (17) pour le mode négatif correspond au mot de code inversé (46) du mode positif de la seconde valeur la plus élevée de l'amplitude de la première plage, que de façon correspondante sont formés les mots de code pour les autres valeurs des amplitudes de la seconde plage, et que pour la valeur la plus élevée de l'amplitude de la seconde plage, le mot de code pour le mode positif correspond au mot de code inversé du mode négatif de la valeur la plus faible de l'amplitude de la première plage, et que le mot de code pour le mode négatif correspond au mot de code inversé du mode positif de la valeur la plus faible de l'amplitude de la première plage, en sorte qu'il en résulte une symétrie inversée en diagonale entre les deux plages des valeurs des amplitudes du signal d'entrée et du signal de sortie.

2. Procédé selon la revendication 1, caractérisé par le fait que dans les deux plages, pour la valeur la plus faible et la plus élevée de l'amplitude, les mots de code pour le mode positif et le mode négatif sont égaux entre eux.

3. Procédé selon les revendications 1 ou 2, caractérisé par le fait que la conversion du signal d'entrée en le signal de sortie a lieu selon le schéma de code suivant le tableau 1.

4. Procédé selon les revendications 1 à 3, caractérisé par le fait que la reconversion des mots de code en six chiffres en mots de code à cinq chiffres, a lieu, avec mise en oeuvre de la même association, dans le sens inverse.

5. Procédé selon la revendication 4, caractérisé par le fait que la reconversion de mots de code qui ont été faussés lors de la transmission en un mot de code à six chiffres initialement non utilisé, a lieu selon le schéma de code suivant le tableau 2.

6. Procédé selon l'une des revendications précédentes, caractérisé par le fait que dans les tableaux 1 et 2 l'ordre des bits est inversé aussi bien dans les mots à cinq bits que dans les mots à six bits.

## FIG 1

| 5B - Wort | | Mode + | | Folge-mode | Mode - | | Folge-mode |
|---|---|---|---|---|---|---|---|
| 0 | 00000 | 50 | 110010 | + | 50 | 110010 | − |
| 1 | 00001 | 51 | 110011 | − | 33 | 100001 | + |
| 2 | 00010 | 54 | 110110 | − | 34 | 100010 | + |
| 3 | 00011 | 35 | 100011 | + | 35 | 100011 | − |
| 4 | 00100 | 53 | 110101 | − | 36 | 100100 | + |
| 5 | 00101 | 37 | 100101 | + | 37 | 100101 | − |
| 6 | 00110 | 38 | 100110 | + | 38 | 100110 | − |
| 7 | 00111 | 39 | 100111 | − | 7 | 000111 | − |
| 8 | 01000 | 43 | 101011 | − | 40 | 101000 | + |
| 9 | 01001 | 41 | 101001 | + | 41 | 101001 | − |
| 10 | 01010 | 42 | 101010 | + | 42 | 101010 | − |
| 11 | 01011 | 11 | 001011 | + | 11 | 001011 | − |
| 12 | 01100 | 44 | 101100 | + | 44 | 101100 | − |
| 13 | 01101 | 45 | 101101 | − | 5 | 000101 | + |
| 14 | 01110 | 46 | 101110 | − | 6 | 000110 | + |
| 15 | 01111 | 14 | 001110 | + | 14 | 001110 | − |
| 16 | 10000 | 49 | 110001 | + | 49 | 110001 | − |
| 17 | 10001 | 57 | 111001 | − | 17 | 010001 | + |
| 18 | 10010 | 58 | 111010 | − | 18 | 010010 | + |
| 19 | 10011 | 19 | 010011 | + | 19 | 010011 | − |
| 20 | 10100 | 52 | 110100 | + | 52 | 110100 | − |
| 21 | 10101 | 21 | 010101 | + | 21 | 010101 | − |
| 22 | 10110 | 22 | 010110 | + | 22 | 010110 | − |
| 23 | 10111 | 23 | 010111 | − | 20 | 010100 | + |
| 24 | 11000 | 56 | 111000 | + | 24 | 011000 | + |
| 25 | 11001 | 25 | 011001 | + | 25 | 011001 | − |
| 26 | 11010 | 26 | 011010 | + | 26 | 011010 | − |
| 27 | 11011 | 27 | 011011 | − | 10 | 001010 | + |
| 28 | 11100 | 28 | 011100 | + | 28 | 011100 | − |
| 29 | 11101 | 29 | 011101 | − | 9 | 001001 | + |
| 30 | 11110 | 30 | 011110 | − | 12 | 001100 | + |
| 31 | 11111 | 13 | 001101 | + | 13 | 001101 | − |
| | ABCDE | | ABCDEF | | | ABCDEF | |

# FIG 2

| 6B—Wort | | 5B—Wort | |
|---|---|---|---|
| 0 | 000000 | 31 | 00000 |
| 1 | 000001 | 1 | 00001 |
| 2 | 000010 | 2 | 00010 |
| 3 | 000011 | 3 | 00011 |
| 4 | 000100 | 14 | 01110 |
| 8 | 001000 | 24 | 11000 |
| 15 | 001111 | 15 | 01111 |
| 16 | 010000 | 16 | 10000 |
| 31 | 011111 | 31 | 11111 |
| 32 | 100000 | 0 | 00000 |
| 47 | 101111 | 15 | 01111 |
| 48 | 110000 | 16 | 10000 |
| 55 | 110111 | 7 | 00111 |
| 59 | 111011 | 17 | 10001 |
| 60 | 111100 | 28 | 11100 |
| 61 | 111101 | 29 | 11101 |
| 62 | 111110 | 30 | 11110 |
| 63 | 111111 | 31 | 00000 |
| | ABCDEF | | ABCDE |